# EUROPEAN PATENT SPECIFICATION

(11) **EP 4 013 012 B1**
(45) Date of publication and mention of the grant of the patent: **31.01.2024**
(21) Application number: 20213175.1
(22) Date of filing: 10.12.2020
(51) Int. Cl.: H04L 61/4511

(54) **METHOD FOR OPERATING AN APPLICATION FUNCTIONALITY AND/OR AN ADDRESS RESOLUTION FUNCTIONALITY WITHIN OR AS PART OF A TELECOMMUNICATIONS NETWORK, CLIENT COMMUNICATION DEVICE, SYSTEM OR TELECOMMUNICATIONS NETWORK, ADDRESS RESOLUTION FUNCTIONALITY, PROGRAM AND COMPUTER PROGRAM PRODUCT**
VERFAHREN ZUM BETRIEB EINER ANWENDUNGSFUNKTIONALITÄT UND/ODER EINER ADRESSENAUFLÖSUNGSFUNKTIONALITÄT IN ODER ALS TEIL EINES TELEKOMMUNIKATIONSNETZWERKS, CLIENT-KOMMUNIKATIONSVORRICHTUNG, SYSTEM ODER TELEKOMMUNIKATIONSNETZWERK, ADRESSENAUFLÖSUNGSFUNKTIONALITÄT, PROGRAMM UND COMPUTERPROGRAMMPRODUKT
PROCÉDÉ DE FONCTIONNEMENT D'UNE FONCTIONNALITÉ D'APPLICATION ET/OU D'UNE FONCTIONNALITÉ DE RÉSOLUTION D'ADRESSE DANS OU EN TANT QUE PARTIE D'UN RÉSEAU DE TÉLÉCOMMUNICATIONS, DISPOSITIF DE COMMUNICATION CLIENT, SYSTÈME OU RÉSEAU DE TÉLÉCOMMUNICATIONS, FONCTIONNALITÉ DE RÉSOLUTION D'ADRESSE, PROGRAMME ET PRODUIT PROGRAMME INFORMATIQUE

(43) Date of publication of application: 15.06.2022
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- EP-A1- 3 694 187
- WO-A1-2012/107788
- ERICSSON: "KI#2, sol#32 update", 3GPP DRAFT; S2-2008488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. electronic meeting ;20201116- 20201120 9 November 2020 (2020-11-09), XP051952544, Retrieved from the Internet: URL:https://ftp.3gpp.org/tsg_sa/WG2_Arch/T SGS2_142e_Electronic/Docs/S2-2008488.zip S2-2008488 sol32 update.docx [retrieved on 2020-11-09]
- ELZ UNIVERSITY OF MELBOURNE R BUSH RGNET R ET AL: "Clarifications to the DNS Specification; rfc2181.txt", CLARIFICATIONS TO THE DNS SPECIFICATION; RFC2181.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 July 1997 (1997-07-01), XP015007965,

## Description

### BACKGROUND

The present invention relates a method for operating an application functionality and/or an address resolution functionality within or as part of a telecommunications network comprising a resource, representing at least one of an application, a service, a device, a user or an abstraction thereof, accessible through the resource, the resource comprising a plurality of endpoints each of which having or being assigned to a service or application address, wherein a client communication device of or connected with the telecommunications network is able to request or to access at least one service or application provided by the resource.

Furthermore, the present invention relates to a client communication device for operating an application functionality and/or an address resolution functionality within or as part of a telecommunications network comprising a resource, representing at least one of an application, a service, a device, a user or an abstraction thereof, accessible through the resource, the client communication device being able to connect to a plurality of endpoints of the resource, each of which having or being assigned to a service or application address, wherein the client communication device of or connected with the telecommunications network is able to request or to access at least one service or application provided by the resource.

Additionally, the present invention relates to a system or telecommunications network for operating an application functionality and/or an address resolution functionality within or as part of a telecommunications network comprising a resource, representing at least one of an application, a service, a device, a user or an abstraction thereof, accessible through the resource, the resource comprising a plurality of endpoints each of which having or being assigned to a service or application address, wherein a client communication device of or connected with the telecommunications network is able to request or to access at least one service or application provided by the resource.

Furthermore, the present invention relates to a program and to a computer-readable medium for operating an application functionality and/or an address resolution functionality within or as part of a telecommunications network comprising a resource according to the inventive method.

Resources available to client devices or client communication devices within a telecommunications network, and representing at least one of an application, a service, a device, a user or an abstraction thereof, are typically accessed (by these client communication devices) using endpoints (being related to such resources). Such endpoints typically have or are assigned to a service or application address. In order to transmit information regarding valid service or application addresses, the domain name system, DNS, or domain name system protocol, DNS protocol (RFC 1034, RFC 1035), is often used. The DNS protocol is fairly simple: It consists of a request including the resource address to be resolved (e.g. a host name, e.g. related to the requested resource) and a reply including one or more Resource Records (RRs) with the records found matching the query (e.g. IP address/addresses of the requested hostname). The DNS protocol allows for protocol extensions (EDNS, RFC 6891), as well as specifics for mobile networks such as those specified in GSMA's IR.67 specification (e.g. specific hostname structures for network resources).

Edge Computing is an example of a such a resource that can be made accessible to client communication devices through a plurality of endpoints, typically having or being assigned to a service or application address. Edge computing can, e.g., be used to decrease the latency with which applications are able to be accessed by client devices.

Resources, or endpoints of resources, if modified or re-arranged, may take a certain amount of time to deploy, i.e. a given amount of time passes between the moment a resource is deployed/moved and the moment it is accessible. Such kinds of delays as well as further factors that influence or determine a modification, regarding a considered client communication device, which endpoint of a plurality of endpoints (regarding a requested resource) shall be used by that client communication device might lead to a reduced quality of service for the client communication device and/or within a telecommunications network. Furthermore, certain endpoints may only be accessible from certain network and/or physical locations, e.g. for endpoints deployed for enabling low-latency access to resources to clients in its vicinity.

In the general context of DNS address resolution, document EP 3 694 187 A1 describes the provision of a DNS caching record to a mobile terminal device. The record is associated with a condition on the location of a terminal device and if the terminal device moves and no longer satisfies the location condition, it sends a new request for DNS resolution. Furthermore, Network Working Group Request for Comment RFC 2181 ("Clarifications to the DNS Specification", R. Elz and R. Bush, Internet Engineering Task Force, July 1997) describes several aspects of the DNS specification, such as resource record sets in which the resource records have differing TTLs (Time to Live).

### SUMMARY

An object of the present invention is to provide a technically simple, effective and cost effective solution for operating an application functionality and/or an address resolution functionality within or as part of a telecommunications network comprising a resource, representing at least one of an application, a service, a device, a user or an abstraction thereof, accessible through the resource, the resource comprising a plurality of endpoints each of which having or being assigned to a service or application address. A further object of the present invention is to provide a corresponding client communication device, system or mobile communication network, address resolution functionality, and a corresponding program and computer-readable medium.

The object of the present invention is achieved by a method according to claim 1.

It is thereby advantageously possible according to the present invention that by providing the address mapping information regarding the at least one resource to the client communication device, it is possible, for the client communication device, to be involved in a decision regarding the validity of an address information or the information which endpoint of or related to a resource should be used (by the client communication device). To apply a terminology often used in relation to the domain name system (DNS) protocol, the address mapping information would correspond to a kind of resource record returned (to the client communication device) by a server entity; however, such a resource record - according to the present invention - would only be conditionally valid, and, as recited in claim 1, the client communication device is involved in the determination whether one condition or a plurality of conditions (indicated by means of the address mapping information) is valid or verified, or not. Hence, according to the present invention, a returned (resource) record (as part of the address mapping information) - that might be compared to a (resource) record according to the domain name system protocol - is by default not valid unless a specific one condition or a specific plurality of conditions is or are met (or, it is only valid if a specific one condition or a specific plurality of conditions is or are met).

According to a conventionally known implementation of a domain name system protocol, the address information (as part of the address mapping information) - that might be compared to a (resource) record according to the domain name system protocol - is (especially, by default) valid and several conditions can trigger that its validity is revoked (e.g. especially in case the time-to-live, TTL, parameter expires).

According to the present invention, a resource is accessible through (or comprises) a plurality of endpoints (or resource endpoints). The resource represents at least one of an application, a service, a device, a user or an abstraction thereof, such an application, a service, a device, a user or an abstraction thereof being accessible through the resource. Each one of the different endpoints of or related to the resource, has or is assigned to a service or application address, specific to each one of the considered endpoints. A client communication device of or connected with the telecommunications network is able to request or to access at least one service or application provided by the resource by means of requesting or accessing the at least one service or application by means of addressing at least one endpoint (of the plurality of endpoints). This means that, typically, a plurality of different endpoints might be usable or able to be used, in a specific situation or in specific circumstances, by the client communication device to access the considered resource.

According to the present invention, the telecommunications network and/or the resource comprises or is assigned to an address resolution functionality which is able to provide, to the client communication device (i.e. the client communication device receives), an address mapping information regarding the at least one resource or regarding the at least one service or application.

According to the present invention, the address mapping information comprises a condition information and a service or application address information, the service or application address information being associated or related to the condition information, and the condition information comprising a time-related condition element and a location-related condition element defining a condition of or related to the client communication device. The address mapping information further comprises at least one further service or application address information) associated or related to at least one further condition information comprising a further time-related condition element and a further location-related condition element.

According to the present invention, based on the content of the address mapping information, the client communication device is able to determine the validity (or invalidity) of the service or application address information (i.e. whether the resource endpoint related to or associated with this service or application address information) shall be contacted or requested or whether it is worth trying to request the resource from the endpoint related to or associated with this service or application address information. According to the present invention, this is realized by means of the client communication device conducting a detection related to the condition elements of the at least one condition information and the at least one further condition information, wherein the client communication device considers the service or application address information, related to the condition information, as a valid service or application address information if and only if the at least one condition - of the at least one condition element referred to by the at least one condition information - is detected to be verified.
In other words, the address resolution functionality contains mapping records (i.e. corresponding to or reflecting address mapping information) with conditional validity for resource X, e.g. if a first condition (condition A) is met, resource X's name should be resolved to a first address, e.g. an internet protocol address (IP-A), and if a second condition (condition B) is met, resource X's name should be resolved to a second address, e.g. an internet protocol address (IP-B); in case that a client communication device queries the mapping for resource X, the address resolution functionality returns the conditional resource mapping records (i.e. the address mapping information) for resource X, and depending on whether the first or second condition (condition A or B) is met, the client communication device uses the appropriate mapping record (service or application address information), pointing either to the first address (IP-A) if the first condition A is met or to the second address (IP-B) if the second condition B is met, i.e. resource X is resolved to IP-A or IP-B depending on the condition. A request to said resource X is thus addressed to the corresponding first or second address.
A specific example application of such a conditional address resolution is the case when a given application can be deployed or moved on a different location (e.g. in case of edge computing servers) depending on the location of the client. In such a case, not all locations may be accessible at all times from a given location of the client communication device.

According to the present invention, it is advantageously possible that the correct address (i.e. the correct service or application address information) is directly used (in the respective circumstances as determined or detected by the client communication device, i.e. in case that the respective conditions are fulfilled or verified) by the client communication device (i.e. the client communication device contacts the correct address directly). It is thereby advantageously possible - especially with regard to other methods such as redirection mechanism, where the client communication device sends a request to a wrong address and obtains the new address in the response - to reduce a time delay until the correct address is used and/or to reduce the effort and/or signaling overhead associated with not directly contacting the correct address to use.

According to the present invention, it is advantageously possible to use the inventive method, client communication device and/or system by means of implementing a request-response messaging pattern or, alternatively, a subscribe-notify pattern: In both of these implementation scenarios, the address mapping information is transmitted (by the address resolution functionality) to the client communication device (i.e. received by the client communication device) - corresponding to the first step of the inventive method -, and the client communication device conducts a detection related to the conditions of the client communication device such that it considers the service or application address information as a valid service or application address information if and only if the corresponding condition is detected to be verified.

According to the present invention, it is especially proposed to use the application functionality and/or the address resolution functionality within or as part of a telecommunications network, and, of course, also the transmission of the address mapping information and the evaluation and detection by the client communication device according to the first and second step in order to realize a proactive relocation of edge resources in a telecommunications network, especially in a mobile communication network. It is thereby advantageously possible to provide answers or solutions to questions or problems like 'how can the network plan at what moments in time which edge resources need to be deployed/moved?' or 'how can such resources be made available to the users transparently - i.e. without the need to explicitly request each resource relocation?'.
It is conventionally known to use edge computing in a telecommunications network, especially a mobile communication network; e.g. 3GPP Release 16's TS 23.501 already defines some edge computing (EC) enablers as well as extensions for DNS to better support the edge computing case. In its current version, edge computing can be supported by one or a combination of the following enablers:
-- User plane (re)selection: the 5G Core Network (re)selects UPF (user plane function) to route the user traffic to the local data network;
-- Local routing and traffic steering: the 5G Core network selects the traffic to be routed to the applications in the local data network; this includes the use of a single PDU (protocol data unit) Session with multiple PDU Session anchor(s) (UL CL / IP v6 multihoming).
-- Session and service continuity to enable client communication device (user equipment) and application mobility as described in clause 5.6.9 of the mentioned 3GPP document;
-- An application function may influence UPF (re)selection and traffic routing via PCF or NEF;
-- Network capability exposure: 5G Core Network and application function to provide information to each other via NEF (network exchange function);
-- QoS and Charging: PCF (policy and charging function) provides rules for QoS (quality-of-service) control and charging for the traffic routed to the local data network;
-- Support of Local Area Data Network: 5G Core Network provides support to connect to the LADN in a certain area where the applications are deployed.

Furthermore, in Release 17's TS 23.748, 'Study on enhancement of support for edge computing in 5G Core network (5GC)', improvements to edge computing implementations are proposed, where architecture assumptions and connectivity models are realized such that the edge application server is either accessed with UL CL/BP or without UL CL/BP (according to TS 23.748): the 5G system and edge application servers (EAS) are hosted in edge hosting environment, where the EAS represents the edge application server (i.e. the edge computing infrastructure, ECI where the edge applications run); a PDU session is always anchored on a PDU Session Anchor, PSA. The data network (DN) the client communication device (or user equipment) is accessing is accessible via the PSA, and the following connectivity models are considered to enable edge computing:
-- Distributed anchor point: the PDU Session anchor is moved far out in the network, to the local sites. It is the same for all the user PDU session traffic. Re-anchoring (SSC#2 and SSC#3) is used to optimize traffic routing for all applications when moving long distances;
-- Session breakout: the PDU session has a PDU Session anchor in a central site and a PDU Session anchor in the local site. Only one of them provides the IP anchor point. The edge computing application traffic is selectively diverted to the local PDU session anchor using UL classifier or multihoming BP technology; re-anchoring of the local PDU session anchor is used to optimize traffic routing for locally diverted traffic as the user moves;
-- Multiple PDU sessions: Edge computing applications use a specific PDU session with the PDU session anchor in the local site. The rest of applications use a PDU Session with a central PDU Session anchor. The mapping between applications and PDU sessions is steered by the URSP rules. Re-anchoring (SSC#2 and SSC#3) is used to optimize traffic routing for Edge Computing applications as the user moves.
Some of the proposed methods additionally employ a DNS, which is used by the client communication device (or user equipment) to request the location of certain known resources (e.g. URI), which the network can return with a reference to the most suitable ECI resource.

By means of applying the principles of the present invention - especially the transmission of the address mapping information and the evaluation and detection by the client communication device according to the first and second step -, it is advantageously made possible to realize a proactive relocation of edge resources in a telecommunications network, especially in a mobile communication network, and hence to realize an edge deployment planning function (EDPF) or functionality. Such an edge deployment planning function or functionality is realized, i.e. the respective relocation decisions implemented or communicated, by means of using the address resolution functionality to provide, to the client communication device, the address mapping information whereby a network resource such as an edge computing infrastructure resource or regarding at least one service or application is communicated. The respective relocation decisions are implicitly contained or comprised in the at least one condition information or corresponding condition element of or related to the client communication device.

According to the present invention, it is advantageously possible and preferred that in a third step, the client communication device addresses the resource
-- via the endpoint of the plurality of endpoints that is related to the service or application address information associated or related to the at least one condition information in case that the service or application address information is considered a valid service or application address information, or
-- via at least one of a plurality of endpoints of the plurality of endpoints that are related to a plurality of pieces of service or application address information associated or related to the a plurality of pieces of condition information in case that these pieces of service or application address information are considered valid pieces of service or application address information.

It is thereby advantageously possible that the client communication device - after having detected, in the second step of the inventive method, at least one valid service or application address information (namely if and only if the at least one related condition of the at least one condition element referred to by the at least one condition information is detected to be verified) - actually addresses (or contacts) the resource via the endpoint associated with the at least one valid service or application address. According to the present invention, the address mapping information comprises at least two pieces of condition information wherein a service or application address information is associated to each piece of condition information. Upon detection for validity (in the second step and by the client communication device), of this plurality of pieces of service or application address information, there might be only one service or application address information being held to be valid (by the client communication device), in which case the resource will be addressed (or contacted), by the client communication device, via the endpoint associated with this (one) corresponding valid service or application address; however there might also be the case that more than one piece of service or application address information are held to be valid (by the client communication device). In this latter case, the resource will be addressed (or contacted), by the client communication device, via the one endpoint or more than one endpoints associated with this plurality of corresponding valid service or application addresses.

According to the present invention, it is furthermore advantageously possible and preferred that, prior to or during the first step, the client communication device receives, from the address resolution functionality - either as part of the address mapping information or besides the address mapping information - at least one unconditional service or application address information, the unconditional service or application address information being able to be used, by the client communication device, as a valid service or application address information, especially without a condition being detected to be verified.

It is thereby advantageously possible according to the present invention that a conventionally known domain name system protocol, or indications within resource records, is/are able to be used in accordance with the inventive method and/or by the inventive client communication device and system, and especially in parallel (or according to a mixed manner of processing) to pieces of information or indications within the address mapping information according to the present invention.

According to the present inventionto the mapping information refers, by means of the pieces of condition information, to conditions or situations being defined by more than one kind of conditions, i.e. not only by a time-related condition (such as, e.g., an absolute time or time interval or a time or time interval within an hour, or day, or week, or month, or year) but additionally also by a location-related condition (of the client communication device, i.e. for example whether the client communication device is located at a specific geographical position or location, or within a geographical area or a tracking area or the like).
Hence, according to the present invention, the address mapping information is organized by means of at least two pieces of condition information. Associated to each such condition information or piece of condition information, there is a service or application address information (i.e. preferably one piece of service or application address information) being related to an endpoint of the plurality of endpoints of the resource. Each piece of condition information comprises at least a time-related condition element and a location-related condition element as described above.

According to the present invention the address mapping information comprises - besides the at least one condition information and the service or application address information - at least one further condition information and a further service or application address information associated or related to the at least one further condition information, wherein the further service or application address information is related to a further endpoint of the plurality of endpoints and the at least one further condition information comprising at least one further condition element defining a further condition of or related to the client communication device, wherein, during the second step, the client communication device conducts a detection
-- related to the condition element or the plurality of condition elements of the condition information and
-- related to the further condition element or the plurality of further condition elements of the further condition information,
wherein the client communication device considers the further service or application address information, related to the further condition information, as a valid service or application address information if and only if the at least one further condition - of the at least one further condition element referred to by the at least one further condition information - is detected to be verified.

Furthermore, it is advantageously possible and preferred according to the present invention that the conditions of the condition elements of the condition information and the further condition information relate to mutually excluding conditions or to conditions that, at least partially, do not overlap.

Thereby, it is advantageously possible that either the service or application address information is held to be a valid service or application address information or, otherwise, the further service or application address information is held to be a valid service or application address information - but typically not both.

According to the present invention, at least one of the conditions the further condition information refers to is unmet or unrealized at the time of the client communication device receiving the address mapping information.

Thereby - by means of the address mapping information being received by the client communication device and comprising a record (or a combination of a condition information and a service or application address information) referring a condition that is unmet or unrealized at the time of the client communication device receiving the address mapping information - the client communication device already has this record, and, hence, the client communication device does not require additional information when the associated condition becomes (at a later point in time) verified and the initially valid condition becomes (at this later point in time) invalid, resulting in the associated service or application address becoming invalid).

According to a further preferred embodiment of the present invention, one or a plurality of the following is realized:
-- the telecommunications network is or refers to a mobile communication network, especially a cellular mobile communication network,
-- the resource is or corresponds to or relates to an edge computing infrastructure offering at least one edge computing service or application, comprising a plurality of edge computing infrastructure resources, where each edge computing infrastructure resource is addressable via an addressable endpoint through the telecommunications network,
-- a resource endpoint relates to an addressable endpoint of a computing infrastructure resource
-- the endpoints by means of which a service or application running on the edge computing infrastructure is accessible to the client communication device are dynamic, especially in case of such endpoints being conditional on whether a given edge computing infrastructure resource at a given location and/or serving a given location or geographical area is deployed, reachable and offering the service or application to the client communication device at a given point in time,
-- the client communication device is mapped to a tracking area within the telecommunications network and its location or geographical area relates to a tracking area, whereas the client communication device is aware of or is able to detect the tracking area it is located in,
-- the telecommunications network allows local access to resources via a local area data network, LADN, the client communication device is allowed access to the LADN and its location or geographical area relates to the LADN within the telecommunications network, wherein the client communication device is aware of or is able to detect the LADN it has access to,
-- the telecommunications network is segmented in one or more network slices and the client communication device accesses a network slice within the telecommunications network and its location or geographical area relates to the slice within the telecommunications network, wherein the client communication device is aware of or is able to detect the network slice it uses to access the telecommunications network.

It is thereby advantageously possible to apply the present invention to a plurality of different scenarios, especially a scenario involving an edge computing infrastructure and providing an edge computing service, i.e. the resource according to the present invention is an edge computing application or functionality.

According to a further preferred embodiment of the present invention, the address mapping information corresponds to or comprises at least one domain name system resource record, the at least one domain name system resource record comprising a time-to-live value information, wherein the time-to-live value information of the at least one domain name system resource record is set to zero, and/or wherein the address mapping information is transmitted using at least one out of the following protocols:
-- domain name system protocol, DNS protocol,
-- hypertext transfer protocol, HTTP,
-- hypertext transfer protocol secure, HTTPS,
-- domain name system over HTTP, DNS over HTTP,
-- a transport layer security-based protocol, TLS-based protocol,
and/or wherein the pieces of service or application address information as part of the address mapping information correspond to internet protocol addresses.

Thereby, it is advantageously possible that the present invention is comparatively easily integrated in telecommunications network infrastructure.

Furthermore, it is advantageously possible and preferred according to the present invention that prior to the first step, the client communication device requests the address mapping information from the address resolution functionality and by means of an address mapping request related to or regarding the at least one edge computing service or application, the address mapping request comprising a condition request information, wherein the condition request information is related to the condition information.

Thereby, it is advantageously possible that the client communication device is able to actively request the transmission of the address mapping information, and also to specify, at least partly, its content.

Furthermore, it is advantageously possible and preferred according to the present invention that the telecommunications network and/or the resource and/or the address resolution functionality comprises or is assigned to a prediction functionality, wherein the prediction functionality predicts the locations of the client communication device, and provides information to the address resolution functionality such that the address mapping information regarding the at least one service or application relate to conditions that the client communication device is comparatively likely to fulfill.

Thereby, it is advantageously possible that the address mapping information or its content is able to be specifically tailored for the client communication device or for a group of client communication devices.

Furthermore, the present invention relates to a client communication device according to claim 9 and to a system or telecommunications network according to claim 10.

Still additionally, the present invention relates to an address resolution functionality of an inventive system or an inventive telecommunications network.

Additionally, the present invention relates to a program comprising a computer readable program code and/or a computer-readable medium comprising instructions, which, when executed on a computer and/or on a client communication device and/or on a address resolution functionality and/or on a network node of a telecommunications network, or in part on a client communication device and/or in part on an address resolution functionality and/or in part on a network node of a telecommunications network, causes the computer and/or the client communication device and/or the address resolution functionality and/or the network node of the telecommunications network to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising a resource with a plurality of endpoints, wherein a client communication device of or connected with the telecommunications network is able to request or to access at least one service or application provided by the resource.
Figure 2 schematically illustrates a communication diagram exemplarily showing the conditional resource address resolution according to the present invention.
Figure 3 schematically illustrates a subscribe-notify pattern to transmit (or to trigger to transmit) the address mapping information to the client communication device.
Figure 4 schematically illustrates a network-triggered messaging pattern to transmit the address mapping information to the client communication device.
Figure 5 schematically illustrates a time-dependent address resolution according to an embodiment not covered by the claimed invention.
Figure 6 schematically illustrates in greater detail the transmission and the structure of the address mapping information.
Figure 7 schematically illustrates an embodiment regarding a proactive relocation of edge computing resources in a telecommunications network, especially a mobile communication network.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

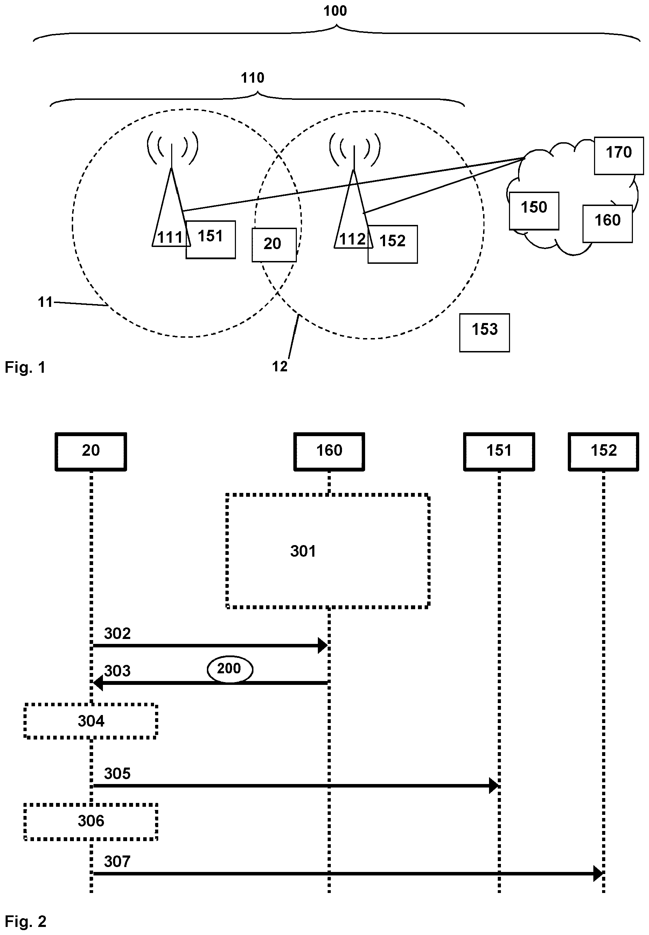

In Figure 1, a telecommunications network 100, comprising a resource 150 with a plurality of endpoints, is schematically shown, wherein a client communication device 20 (or user equipment 20) of or connected with the telecommunications network 100 is able to request or to access, by means of accessing one or a plurality of endpoints, at least one service or application provided by the resource 150. The resource 150 represents at least one of an application, a service, a device, a user or an abstraction thereof, being accessible through the resource 150 by means of accessing at least one of the endpoints of or associated to the resource 150, wherein a first endpoint 151, a second endpoint 152, and a third endpoint 153 are schematically and exemplarily shown. Each one of the plurality of endpoints 151, 152, 153 has or is assigned to a service or application address, such that the client communication device 20 of or connected with the telecommunications network 100 is able to request or to access at least one service or application provided by the resource 150. The client communication device 20 requests or accesses the at least one service or application by means of addressing at least one endpoint 151, 152, 153 (using the respective endpoint's service or application address). In order for the user equipment 20 or client communication device 20 being able to access, as much as possible, the most suitable one (or the most suitable ones) of the plurality of endpoints 151, 152, 153, the telecommunications network 100 and/or the resource 150 comprises or is assigned to an address resolution functionality 160.

The telecommunications network 100 is exemplarily shown, in Figure 1, as a mobile communication network 100, comprising an access network 110, the access network 110 comprising a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. The user equipment 20 or the client communication device 20 might be mobile, in which case it is able to move with respect to the (typically, but not necessarily static) radio cells 11, 12 or corresponding base station entities 111, 112 of the access network 110. Typically, the mobile communication network 100 also comprises or is assigned to or is able to access a core network (which is not specifically indicated, in Figure 1, by a reference sign).

According to the present invention, the client communication device 20 receives, from the address resolution functionality 160, an address mapping information regarding the at least one resource 150 or regarding the at least one service or application. The address mapping information comprises at least two pieces of condition information and a service or application address information associated or related to each condition information respectively. The two pieces of service or application address information are related to endpoints of the plurality of endpoints 151, 152, 153 and each of the two pieces of condition information comprise at least a time-related condition element and a location-related condition element defining a condition of or related to the client communication device 20.

In the exemplary representation of Figure 1, a prediction functionality 170 is schematically shown. In a preferred embodiment according to the present invention, the telecommunications network 100 and/or the resource 150 and/or the address resolution functionality 160 comprises or is assigned to a prediction functionality 170, wherein the prediction functionality 170 predicts the locations of the client communication device 20, and provides information to the address resolution functionality 160 such that the address mapping information 200 regarding the at least one service or application relate to conditions that the client communication device 20 is comparatively likely to fulfill.

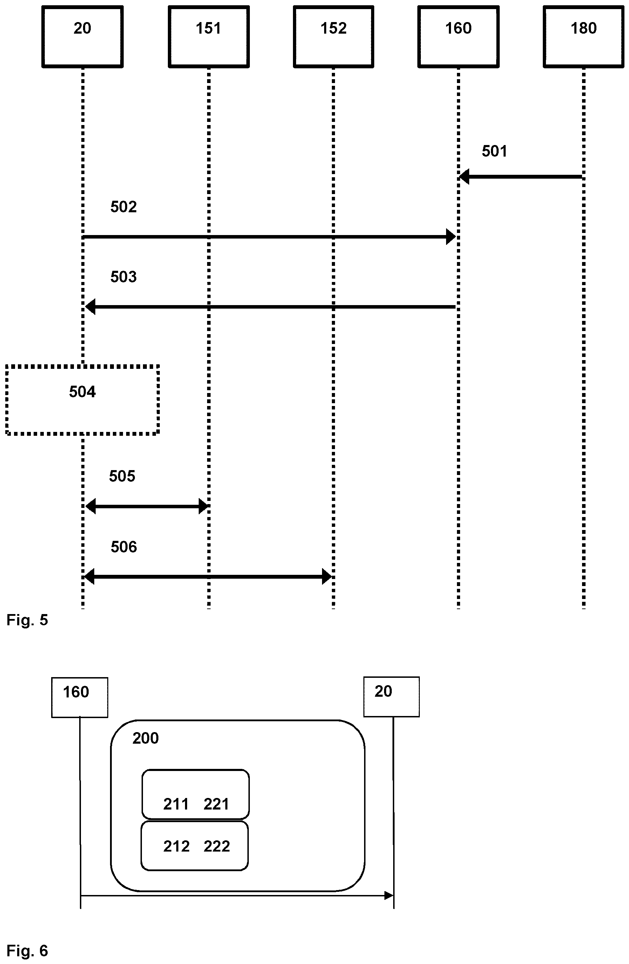

As already mentioned, the address mapping information is transmitted to the client communication device 20. This is schematically shown in Figure 6 which illustrates in greater detail the transmission and the structure of the address mapping information 200. The address mapping information 200 comprises two pieces of condition information, namely a first condition information 211 and a second condition information 212. Both pieces of condition information are related or associated to a service or application address information, respectively, i.e. the first condition information 211 is related or associated to a first service or application address information 221, and the second condition information 212 is related or associated to a second service or application address information 222. Generally, each piece of service or application address information 221, 222 is related to an endpoint of the plurality of endpoints 151, 152, 153 (in exemplary situation shown in Figure 6, the first service or application address information 221 is related to the first endpoint 151, and the second service or application address information 222 is related to the second endpoint 152). Furthermore, each (piece of) condition information 211, 212 comprises at least a time-related condition element and a location-related condition element defining a condition of or related to the client communication device 20. This enables the client communication device 20 (or user equipment 20), in the second step, to conduct a detection related to the at least one condition element of each (piece of) condition information 211, 212. The client communication device 20 (or user equipment 20) considers the service or application address information 221, 222 (related to the respective condition information 211, 212), as a valid service or application address information 221, 222 if and only if the corresponding condition information 211, 212 - is detected to be verified.

In Figure 2, a communication diagram between the client communication device 20 (or user equipment 20), the address resolution functionality 160 and a first and a second endpoint 151, 152 is shown, exemplarily illustrating the conditional resource address resolution according to the present invention. In a first processing step 301, the address resolution functionality 160 comprises or contains the following mapping records for resource 150 (e.g. resource X), i.e. associated to the resource 150, such as an edge computing functionality and/or an edge computing infrastructure:
-- a first record, being valid under condition A and pointing to IP address IP-A, related to the first endpoint 151, and
-- a second record, being valid under condition B and pointing to IP address IP-B, related to the second endpoint 152.

In a second processing step 302, the client communication device 20 queries, at the address resolution functionality 160, or requests address information regarding resource X (i.e. the resource 150), especially by means or a request message from the client communication device 20 to the address resolution functionality 160.

In a third processing step 303, the address resolution functionality 160 transmits address mapping information 200 (relating to resource 150) to the client communication device 20. The address mapping information 200 comprises two pieces of condition information (with an associated service or application address information, respectively), namely a first condition information (related to condition A), and a first service or application address information (pointing or relating to the first endpoint 151) being related to the first condition information, as well as a second condition information (related to condition B), and a second service or application address information (pointing or relating to the second endpoint 152) being related to the second condition information.

In the following, the two situations are considered where, in a fourth processing step 304, condition A is (detected, by the client communication device 20 to be) met such that the service or application address of the first endpoint 151 is detected to be a valid service or application address information, and where, in a sixth processing step 306, condition B is (detected, by the client communication device 20 to be) met such that the service or application address of the second endpoint 152 is detected to be a valid service or application address information. The consequence in the first of these two situations is that the client communication device 20, in a fifth processing step 305, resolves the address of resource X (or accesses the resource 150) to IP-A (i.e. by means of accessing the first endpoint 151), and that the client communication device 20, in a seventh processing step 307, resolves the address of resource X (or accesses the resource 150) to IP-B (i.e. by means of accessing the second endpoint 152). It is evident that the situation of the fourth processing step 304 might but does not need to precede the situation of the sixth processing step 306, and vice versa.

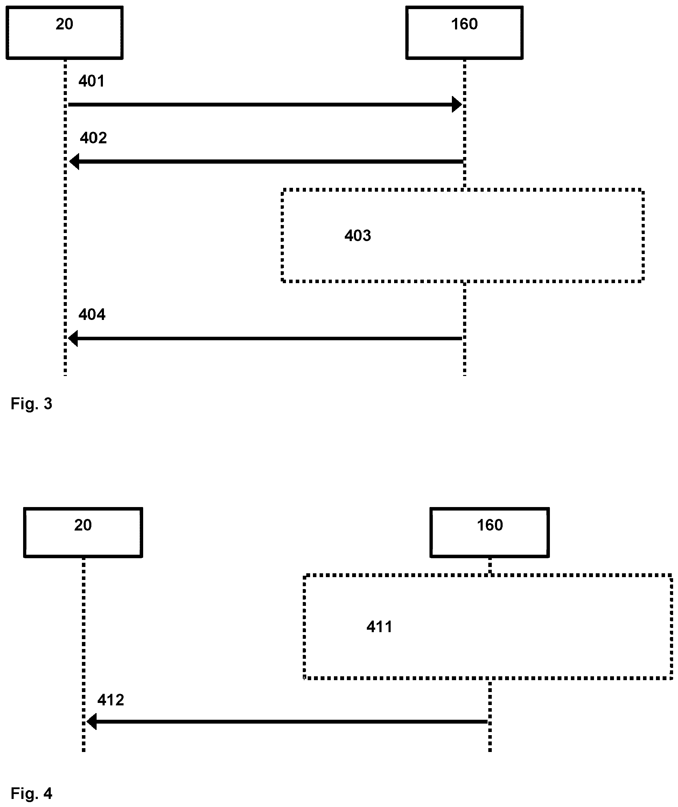

The exemplary situation shown in Figure 2 once more shows that according to the present invention, it is important that the user equipment 20 or client communication device 20 receives the address mapping information 200 (comprising the at least one condition information with an associated service or application address information), and that the client communication device 20 or user equipment 20 detects and decides about the validity of the service or application address and/or whether the respective conditions are met. There are a number of different possibilities how or by means of which mechanism the transmission of the address mapping information 200 to the user equipment 20 or client communication device 20 is actually triggered; this is schematically shown in Figures 3 and 4.

In Figure 3, a subscribe-notify pattern to transmit (or to trigger to transmit) the address mapping information 200 to the client communication device 20 is schematically shown by means of a communication diagram between the client communication device 20 (or user equipment 20) and the address resolution functionality 160. In a first processing step 401 according to Figure 3, the client communication device 20 transmits a message to the address resolution functionality 160 whereby the client communication device 20 subscribes to changes regarding records related to the resource 150 (or resource X). In a second processing step 402 according to Figure 3, the address resolution functionality 160 confirms, especially by means of a message to the client communication device 20, the subscription (subscription confirmation). In a third processing step 403 according to Figure 3, a change in records for the resource 150 (or resource X) occurs, e.g.: "Added record one valid under condition A points to IP address IP-A". In a fourth processing step 404 according to Figure 3, this change is communicated to the client communication device 20, especially by means of a piece of address mapping information 200, i.e. the address mapping information 200 comprising the condition information (relating to condition A) and the corresponding service or application address information (relating to "IP-A", or the address of the first endpoint 151).
Likewise, in Figure 4, a network-triggered messaging pattern to transmit the address mapping information 200 to the client communication device 20 is schematically shown by means of a communication diagram between the client communication device 20 (or user equipment 20) and the address resolution functionality 160. In a first processing step 411 according to Figure 4, a trigger to notify the client communication device 20 regarding records for resource 150 (resource X), e.g.: "Added record one valid under condition A points to IP address IP-A" exists in the address resolution functionality 160. In a second processing step 412 according to Figure 4, this change is communicated to the client communication device 20, especially by means of a piece of address mapping information 200, i.e. the address mapping information 200 comprising the condition information (relating to condition A) and the corresponding service or application address information (relating to "IP-A", or the address of the first endpoint 151).

Hence, according to the present invention, a method is proposed wherein a client device (or client communication device 20) is in contact with a telecommunications network 100 (preferably, but not necessarily a mobile communication network), and the telecommunications network 100 comprising an address resolution functionality, ARF, 160, wherein the ARF 160 sends, to the client device 20, one or more mapping records (address mapping information 200), with each mapping record containing:
-- the mapping between a service or application address (e.g. a host name, domain name) and an address (e.g. IP address) used to reach said service or application
-- one, several or a logical combination of conditions under which the given mapping is valid. Unless the condition or set of conditions are met, the mapping is not considered valid by the client device 20.

It is preferred according to the present invention that the time-related condition is any of the following:
-- the time frame expressed in absolute time or as offset relative to the current time when the mapping record is valid;
-- a starting time when the mapping record starts to be valid.
It is also preferred that the location-related condition is any of the following:
-- the location or location area where this mapping record is valid;
-- a network or networks (e.g. mobile networks identified by a PLMN ID) where this mapping record is valid;
-- the case where the location within a mobile network is expressed as a tracking area, TA;
-- the case where the location within a mobile network refers to logical region within the mobile network, expressed as a local area data network, LADN; and/or a slice identifier.
It is furthermore preferred that:
-- an existing time-to-live, TTL, value of a mapping record (existing DNS Resource Record, RR, value) is set to zero (not specified in conventionally known DNS specifications) to signal that the record is not valid and the validity conditions are specified using additional optional information elements within the mapping record;
-- a client device 20 requests the ARF 160 a mapping including in the request conditional parameters the client is interested to fulfill; this may include any of the conditions possible to be expressed on the mapping record;
-- the transmission of the ARF messages via different protocols, especially DNS protocol, HTTP protocol (includes DNS over HTTP), HTTPS (e.g. TLS-based).

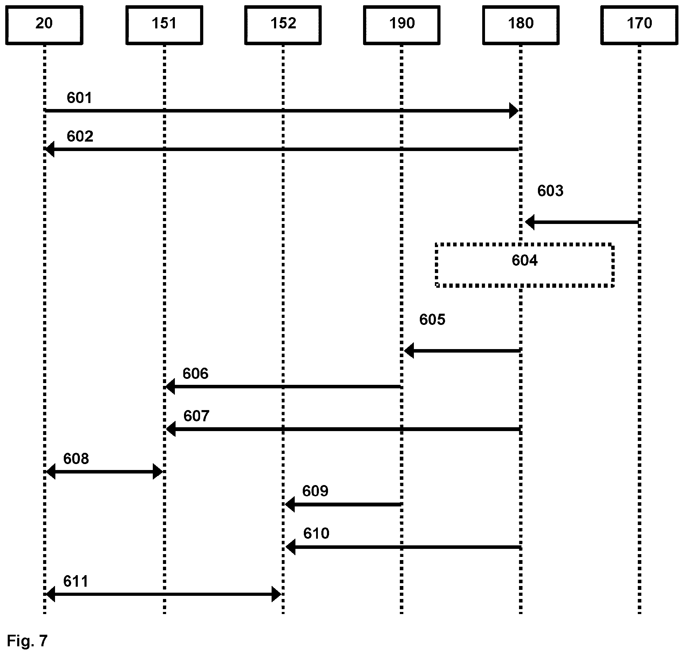

By means of applying the principles of the present invention - especially the transmission of the address mapping information 200 and the evaluation and detection by the client communication device 20 according to the first and second step -, it is advantageously made possible to realize a proactive relocation of edge resources in a telecommunications network 100, especially in a mobile communication network, and hence to realize an edge deployment planning function (EDPF) or functionality. In Figure 5 and Figure 7, such an edge deployment planning function or functionality is designated by means of reference sign 180. The edge deployment planning function or functionality, i.e. the respective relocation decisions implemented or communicated, are realized by means of using the address resolution functionality 160 providing, to the client communication device 20, the address mapping information 200.

In Figure 5, a time-dependent address resolution according to an embodiment not covered by the claimed invention is schematically shown by means of a communication diagram between the client communication device 20 (or user equipment 20), a first endpoint 151, a second endpoint 152, the address resolution functionality 160, and the edge deployment planning function or functionality 180. In a first processing step 501 according to Figure 5, the application location is configured (by the edge deployment planning function 180, and a corresponding message sent to the address resolution functionality 160) such that the edge computing application or other functionality is resolved to the first endpoint 151 (also called edge computing infrastructure element 1, ECI-1) at a first point in time (t₁), and to the second endpoint 152 (also called edge computing infrastructure element 2, ECI-2) at a second point in time (t₂). In a second processing step 502 according to Figure 5, the user equipment 20 or client communication device 20 queries the application location (especially an edge computing infrastructure application), and especially for points the two points in time t₁ and t₂. In a third processing step 503 according to Figure 5, the address resolution functionality 160 a corresponding address mapping information 200 to the user equipment 20 or client communication device 20, thereby resolving the (edge computing infrastructure) application such that the location points to ECI-1 (first endpoint 151) on t₁, and to ECI-2 (second endpoint 152) on tz. In a fourth processing step 504 according to Figure 5, the application location is known, to the client communication device 20, for both points in time, t₁, and t₂. In a fifth and a sixth processing step 505, 506 according to Figure 5, the user equipment 20 or client communication device 20
-- communicates with or addresses the (edge computing infrastructure) application using ECI-1 (i.e. the first endpoint 151) at the first point in time or the first time interval (fifth processing step 505), and
-- communicates with or addresses the (edge computing infrastructure) application using ECI-2 (i.e. the second endpoint 152) at the second point in time or the second time interval (sixth processing step 506).

In Figure 7 an embodiment regarding a proactive relocation of edge computing resources in a telecommunications network, especially a mobile communication network, is schematically shown by means of a communication diagram between the client communication device 20 (or user equipment 20), a first endpoint 151, a second endpoint 152, an edge computing orchestrator 190, the edge deployment planning function 180, and the prediction functionality 170.
In a first processing step 601 according to Figure 7, the client communication device 20 sends, to the edge deployment planning function 180, a list comprising locations and time instants of the client communication device 20 for points in time or time intervals in the future. In a second processing step 602 according to Figure 7, the edge deployment planning function 180 sends a confirmation response to the client communication device 20, especially including optional ECI locations, i.e. endpoints or edge computing infrastructure locations. In a third processing step 603 according to Figure 7, the prediction functionality 170 sends a list comprising locations and time instants to the edge deployment planning function 180. In a fourth processing step 604 according to Figure 7, the locations and time instants of the client communication device 20 are now known to edge deployment planning function 180, especially regarding the first and second points in time or the corresponding time intervals t₁, t₂. In a fifth processing step 605 according to Figure 7, the edge deployment planning function 180 Instructs the edge computing orchestrator 190 to deploy the (edge computing) application and/or corresponding data on the corresponding locations for t₁, t₂. In a sixth processing step 606 according to Figure 7, the edge computing orchestrator 190 deploys the (edge computing) application and/or corresponding data on ECI-1, i.e. the first endpoint 151. In a seventh processing step 607 according to Figure 7, the edge deployment planning function 180 deploys the (edge computing) application and/or corresponding data on ECI-1, i.e. the first endpoint 151. In an eighth processing step 608 according to Figure 7, the client communication device 20 communicates with the (edge computing) application and uses the corresponding data on ECI-1, i.e. the first endpoint 151. In a ninth processing step 609 according to Figure 7, the edge computing orchestrator 190 deploys the (edge computing) application and/or corresponding data on ECI-2, i.e. the second endpoint 152. In a tenth processing step 610 according to Figure 7, the edge deployment planning function 180 deploys the (edge computing) application and/or corresponding data on ECI-2, i.e. the second endpoint 152. In an eleventh processing step 611 according to Figure 7, the client communication device 20 communicates with the (edge computing) application and uses the corresponding data on ECI-2, i.e. the first endpoint 152.

Hence, by means of using the edge deployment planning function 180, it is possible to provide for a proactive relocation of edge computing resources in a telecommunications network 100, especially in a mobile communication network, i.e. the edge deployment planning function 180 is made aware of the client communication device's locations at given point in time/time frames and/or time intervals; this can be realized either by the client communication device 20 sending a corresponding information to the edge deployment planning function 180 and the EDPF optionally responds with the Edge Computing Infrastructure (ECI, e.g. a server) locations (e.g. so that the UE does not need to query those), or the prediction functionality 190 provides a prediction of the client communication device's locations to the edge deployment planning function 180. Now, the client communication device 20 locations used for edge application deployment are known to the edge deployment planning function 180. In order to deploy or move the necessary edge application and/or application data to the correct ECls (i.e. endpoints 151, 152, 153), the edge deployment planning function 180 especially either instructs the edge computing orchestrator 190 to perform the application deployment for one or more of the specified locations of the client communication device 20, or directly deploys the necessary application resources on a given ECI (e.g. ECI-1) or endpoint 151, 152, 153. As a result, the client communication device is able to communicate with the application deployed on the respective endpoints, at the corresponding times (e.g. t₁). If at another given time (e.g. t₂), another ECI location (another endpoint) is required (e.g. ECI-2), the edge computing orchestrator 190 is able to deploy the required resources as indicated in the fifth processing step 605, or the edge deployment planning function 180 might directly trigger the deployment on ECI-2, i.e. the second endpoint 152. In any case, the client communication device 20 is able to communicate in t₂ with the application deployed on ECI-2, i.e. the second endpoint 152.

The 5G standard considers that base station entities (especially gNBs according to 5G) can be grouped into tracking areas, where the core network is only aware of user equipment locations (or locations of the client communication device) on a tracking area-based granularity. According to the present invention, the tracking area is able to be considered and used as location indication (for the client communication device 20).
Hence, according to the present invention, and improving on traditional DNS-based resolution, a method is proposed where the client communication device 20 or a user equipment 20 requests the address resolution functionality 160 the resolution of a given resource's address at different points in time (e.g. t₁, t₂). This not only allows the client communication device 20 or user equipment 20 to proactively address the correct ECI (or endpoint) at any given point in time but also reduces the amount of required signaling messages and the required time needed for said signaling.

The method according to the present invention is applicable for planning edge computing resource deployment(s) comprising: a user equipment 20 (or client communication device 20), an edge deployment planning function 180, edge computing infrastructure, edge (computing) application and application data, wherein:
-- the client communication device 20 communicates with an edge (computing) application;
-- the edge (computing) application contains certain data related to the operations the client communication device 20 performs;
-- the edge application runs on edge computing infrastructure;
-- the edge (computing) application is able to run not only on a fixed, centralized location, but is able to, rather, move between different edge computing infrastructure resource locations, or endpoints 151, 152, 153 (e.g. always to a location close to the client communication device 20);
-- application data used by the edge (computing) application are able to move between different edge computing infrastructure resource locations (e.g. always to a location close to the client communication device 20);
-- based on available information, the telecommunications network 100 is able to select a suitable edge computing infrastructure resource for the client communication device 20 to use and/or deploy the application/application data on a suitable edge computing infrastructure resource;
-- the edge deployment planning function 180 receives a set of locations and/or areas and time instants, time frames and/or time offsets (e.g. now + 180s) where it expects to be located;
-- the edge deployment planning function 180 plans and triggers the moving/selection of the edge application and/or application data so that the edge application is available at specific ECI resources at specific points in time. Especially, the client communication device 20 signals (transmits) to the edge deployment planning function 180 a set of locations/areas and time instants where it expects to be located. Furthermore especially, the prediction functionality 170 predicts a set of locations/areas and time instants where it expects the client communication device 20 to be located and signals those to the edge deployment planning function 180. Furthermore especially, the method also comprises a set of gNBs and location/area is signaled as one or more cell IDs and/or one or more Tracking Areas. Furthermore especially, the client communication device 20 sends an additional set of locations/areas and time instants that are used by the edge deployment planning function 180 to update the moving/selection of the edge (computing) application and/or application data. Furthermore especially, the method or the telecommunications network also comprises an edge computing infrastructure resolver (or an address resolution functionality 160) returning, to the client communication device 20, the address mapping information 200 comprising an information where the application/application data is located and which, based on the decision of the edge deployment planning function 180, points in a given time frame to a specific ECI resource or endpoint. Furthermore especially, the client communication device 20 queries the address resolution functionality 160 for the location of a specific resource for one or more specific times or time frames. Furthermore especially, the method also comprises a user plane function acting as session anchor for the data flow between the client communication device 20 and the application and where, based on the decision of the edge deployment planning function, the session anchor is relocated (i.e. re-anchoring) so that at a given point a certain edge computing infrastructure resource is used. Furthermore especially, the method also comprises a user plane function where application traffic is diverted (i.e. Uplink Classifier, UL-CL functionality) from the rest of the client communication device's traffic and where, based on the decision of the edge deployment planning function 180, the UL-CL functionality is configured so that at a given point a certain edge computing infrastructure resource (or endpoint of the resource 150) is used. Furthermore especially, the client communication device 20 contains routing policies, URSPs, which steer application data towards a specific data flow and where, based on the decision of the EDPF, the URSP (UE Route Selection Policy) functionality is configured such that at a given point a certain ECI resource is used.

## Claims

1. Method for operating an address resolution functionality within or as part of a telecommunications network (100) comprising a resource (150), representing at least one of an application, a service, a device or a user, accessible through the resource (150), the resource (150) comprising a plurality of endpoints (151, 152, 153) each of which having or being assigned to a service or application address, wherein a client communication device (20) of or connected with the telecommunications network (100) is able to request or to access at least one service or application provided by the resource (150), wherein the client communication device (20) requests or accesses the at least one service or application by means of addressing at least one endpoint (151, 152, 153), wherein the telecommunications network (100) and/or the resource (150) comprises or is assigned to an address resolution functionality (160), wherein the method comprises the following steps:
-- in a first step, the client communication device (20) receives, from the address resolution functionality (160), an address mapping information (200) regarding the at least one resource (150) or regarding the at least one service or application, the address mapping information (200) comprising at least one condition information (211) and a service or application address information (221) associated or related to the at least one condition information (211), the service or application address information (221) being related to an endpoint of the plurality of endpoints (151, 152, 153) and the at least one condition information (211) comprising a time-related condition element and a location-related condition element defining a condition of or related to the client communication device (20), wherein the address mapping information (200) comprises - besides the at least one condition information (211) and the service or application address information (221) - at least one further condition information (212) and a further service or application address information (222) associated or related to the at least one further condition information (212), wherein the further service or application address information (222) is related to a further endpoint of the plurality of endpoints (151, 152, 153) and the at least one further condition information (212) comprising a further time-related condition element and a further location-related condition element defining a further condition of or related to the client communication device (20),
-- in a second step, the client communication device (20) conducts a detection related to the condition information (211) and to the further condition information (212), wherein the condition defined by the time-related condition element and the location-related condition element of the condition information (211) is detected to be verified by the client communication device (20) and the client communication device (20) considers the service or application address information (221), related to the condition information (211), as a valid service or application address information (221), wherein the condition defined by the further time-related condition element and the further location-related condition element of the further condition information (212) is detected to be invalid by the client communication device (20) and the client communication device (20) does not consider the further service or application address information (222), related to the further condition information (212), as a valid service or application address information (222),
wherein the condition defined by the time-related condition element and the location-related condition element of the condition information (21) becomes invalid at a later point in time and the initially unmet or unrealized further condition is met or realized at the later point in time, wherein the corresponding further service or application address information is subsequently considered as a valid service or application address information by the client communication device (20).

2. Method according to claim 1, wherein in a third step, the client communication device (20) addresses the resource (150)
-- via the endpoint of the plurality of endpoints (151, 152, 153) that is related to the service or application address information (221) associated or related to the at least one condition information (211) in case that the service or application address information (221) is considered a valid service or application address information (221).

3. Method according to one of the preceding claims, wherein, prior to or during the first step, the client communication device (20) receives, from the address resolution functionality (160) - either as part of the address mapping information (200) or besides the address mapping information (200) - at least one unconditional service or application address information (225), the unconditional service or application address information (225) being able to be used, by the client communication device (20), as a valid service or application address information (225), especially without a condition being detected to be verified.

4. Method according to one of the preceding claims, wherein the conditions of the condition elements of the condition information and the further condition information (211, 212) relate to mutually excluding conditions or to conditions that, at least partially, do not overlap.

5. Method according to one of the preceding claims, wherein one or a plurality of the following is realized:
-- the telecommunications network (100) is or refers to a mobile communication network, especially a cellular mobile communication network,
-- the resource (150) is or corresponds to or relates to an edge computing infrastructure offering at least one edge computing service or application, comprising a plurality of edge computing infrastructure resources, where each edge computing infrastructure resource is addressable via an addressable endpoint through the telecommunications network (100),
-- a resource endpoint (151, 152, 153) relates to an addressable endpoint of a computing infrastructure resource,
-- the endpoints (151, 152, 153) by means of which a service or application running on the edge computing infrastructure (150) is accessible to the client communication device (20) are dynamic, especially in case of such endpoints (151, 152, 153) being conditional on whether a given edge computing infrastructure resource at a given location and/or serving a given location or geographical area is deployed, reachable and offering the service or application to the client communication device (20) at a given point in time,
-- the client communication device (20) is mapped to a Tracking Area within the telecommunications network (100) and its location or geographical area relates to a Tracking Area, whereas the client communication device (20) is aware of or is able to detect the Tracking Area it is located in,
-- the telecommunications network (100) allows local access to resources via a local area data network, LADN, the client communication device (20) is allowed access to the LADN and its location or geographical area relates to the LADN within the telecommunications network (100), wherein the client communication device (20) is aware of or is able to detect the LADN it has access to,
-- the telecommunications network (100) is segmented in one or more network slices and the client communication device (20) accesses a network slice within the telecommunications network (100) and its location or geographical area relates to the slice within the telecommunications network (100), wherein the client communication device (20) is aware of or is able to detect the network slice it uses to access the telecommunications network (100).

6. Method according to one of the preceding claims, wherein the address mapping information (200) corresponds to or comprises at least one domain name system resource record, the at least one domain name system resource record comprising a time-to-live value information, wherein the time-to-live value information of the at least one domain name system resource record is set to zero, and/or
wherein the address mapping information (200) is transmitted using at least one out of the following protocols:
-- domain name system protocol, DNS protocol,
-- hypertext transfer protocol, HTTP,
-- hypertext transfer protocol secure, HTTPS,
-- domain name system over HTTP, DNS over HTTP,
-- a transport layer security-based protocol, TLS-based protocol,
and/or wherein the pieces of service or application address information as part of the address mapping information (200) correspond to internet protocol addresses.

7. Method according to one of the preceding claims, wherein prior to the first step, the client communication device (20) requests the address mapping information (200) from the address resolution functionality (160) and by means of an address mapping request (300) related to or regarding the at least one edge computing service or application, the address mapping request (300) comprising a condition request information (311), wherein the condition request information (311) is related to the condition information (211).

8. Method according to one of the preceding claims, wherein the telecommunications network (100) and/or the resource (150) and/or the address resolution functionality (160) comprises or is assigned to a prediction functionality (170), wherein the prediction functionality (170) predicts the locations of the client communication device (20), and provides information to the address resolution functionality (160) such that the address mapping information (200) regarding the at least one service or application relate to conditions that the client communication device (20) is comparatively likely to fulfill.

9. Client communication device (20) for operating an address resolution functionality within or as part of a telecommunications network (100) comprising a resource (150), representing at least one of an application, a service, a device or a user, accessible through the resource (150), the client communication device (20) being able to connect to a plurality of endpoints (151, 152, 153) of the resource (150), each of which having or being assigned to a service or application address, wherein the client communication device (20) of or connected with the telecommunications network (100) is able to request or to access at least one service or application provided by the resource (150), wherein the client communication device (20) requests or accesses the at least one service or application by means of addressing at least one endpoint (151, 152, 153), wherein the telecommunications network (100) and/or the resource (150) comprises or is assigned to an address resolution functionality (160), wherein the client communication device (20) is configured such that:
-- the client communication device (20) receives, from the address resolution functionality (160), an address mapping information (200) regarding the at least one resource (150) or regarding the at least one service or application, the address mapping information (200) comprising at least one condition information (211) and a service or application address information (221) associated or related to the at least one condition information (211), the service or application address information (221) being related to an endpoint of the plurality of endpoints (151, 152, 153) and the at least one condition information (211) comprising a time-related condition element and a location-related condition element defining a condition of or related to the client communication device (20), wherein the address mapping information (200) comprises - besides the at least one condition information (211) and the service or application address information (221) - at least one further condition information (212) and a further service or application address information (222) associated or related to the at least one further condition information (212), wherein the further service or application address information (222) is related to a further endpoint of the plurality of endpoints (151, 152, 153) and the at least one further condition information (212) comprising a further time-related condition element and a further location-related condition element defining a further condition of or related to the client communication device (20),
-- the client communication device (20) conducts a detection related to the condition information (211) and to the further condition information (212), wherein the condition defined by the time-related condition element and the location-related condition element of the condition information (211) is detected to be verified by the client communication device (20) and the client communication device (20) considers the service or application address information (221), related to the condition information (211), as a valid service or application address information (221), wherein the condition defined by the further time-related condition element and the further location-related condition element of the further condition information (212) is detected to be invalid by the client communication device (20) and the client communication device (20) does not consider the further service or application address information (222), related to the further condition information (212), as a valid service or application address information (222),
wherein the condition defined by the time-related condition element and the location-related condition element of the condition information (211) becomes invalid at a later point in time and the initially unmet or unrealized further condition is met or realized at the later point in time, wherein the corresponding further service or application address information is subsequently considered as a valid service or application address information by the client communication device (20).

10. System or telecommunications network (100) for operating an address resolution functionality within or as part of a telecommunications network (100) comprising a resource (150), representing at least one of an application, a service, a device or a user, accessible through the resource (150), the resource (150) comprising a plurality of endpoints (151, 152, 153) each of which having or being assigned to a service or application address, wherein a client communication device (20) of or connected with the telecommunications network (100) is able to request or to access at least one service or application provided by the resource (150), wherein the client communication device (20) requests or accesses the at least one service or application by means of addressing at least one endpoint (151, 152, 153), wherein the telecommunications network (100) and/or the resource (150) comprises or is assigned to an address resolution functionality (160), wherein the system or telecommunications network (100) is configured such that:
-- the address resolution functionality (160) transmits, to the client communication device (20), an address mapping information (200) regarding the at least one resource (150) or regarding the at least one service or application, the address mapping information (200) comprising at least one condition information (211) and a service or application address information (221) associated or related to the at least one condition information (211), the service or application address information (221) being related to an endpoint of the plurality of endpoints (151, 152, 153) and the at least one condition information (211) comprising a time-related condition element and a location-related condition element defining a condition of or related to the client communication device (20), wherein the address mapping information (200) comprises - besides the at least one condition information (211) and the service or application address information (221) - at least one further condition information (212) and a further service or application address information (222) associated or related to the at least one further condition information (212), wherein the further service or application address information (222) is related to a further endpoint of the plurality of endpoints (151, 152, 153) and the at least one further condition information (212) comprising a further time-related condition element and a further location-related condition element defining a further condition of or related to the client communication device (20),
-- the client communication device (20) conducts a detection related to the condition information (211) and to the further condition information (212), wherein the condition defined by the time-related condition element and the location-related condition element of the condition information (211) is detected to be verified by the client communication device (20) and the client communication device (20) considers the service or application address information (221), related to the condition information (211), as a valid service or application address information (221), wherein the condition defined by the further time-related condition element and the further location-related condition element of the further condition information (212) is detected to be invalid by the client communication device (20) and the client communication device (20) does not consider the further service or application address information (222), related to the further condition information (212), as a valid service or application address information (222),
wherein the condition defined by the time-related condition element and the location-related condition element of the condition information (211) becomes invalid at a later point in time and the initially unmet or unrealized further condition is met or realized at the later point in time, wherein the corresponding further service or application address information is subsequently considered as a valid service or application address information by the client communication device (20).

11. Address resolution functionality (160) of a system or a communication network (100) according to claim 10.

12. Program comprising a computer readable program code and/or computer-readable medium comprising instructions, which, when executed in part on a client communication device (20) and in part on an address resolution functionality (160), causes the client communication device (20) and the address resolution functionality (160) to perform a method according one of claims 1 to 8.

## Patentansprüche

1. Verfahren zum Betreiben einer Adressauflösungsfunktionalität innerhalb oder als Teil eines Telekommunikationsnetzes (100), das eine Ressource (150) umfasst, die mindestens eines von einer Anwendung, einem Dienst, einer Vorrichtung und einem Benutzer darstellt, auf die durch die Ressource (150) zugegriffen werden kann, wobei die Ressource (150) mehrere Endpunkte (151, 152, 153) umfasst, von denen jeder eine Dienst- oder Anwendungsadresse besitzt oder einer solchen zugewiesen ist, wobei eine Client-Kommunikationsvorrichtung (20), die zu dem Telekommunikationsnetz (100) gehört oder mit diesem verbunden ist, in der Lage ist, mindestens einen Dienst oder eine Anwendung, der bzw. die durch die Ressource (150) bereitgestellt wird, anzufordern oder darauf zuzugreifen, wobei die Client-Kommunikationsvorrichtung (20) den mindestens einen Dienst oder die mindestens eine Anwendung mittels Adressierung mindestens eines Endpunktes (151, 152, 153) anfordert oder darauf zugreift, wobei das Telekommunikationsnetz (100) und/oder die Ressource (150) eine Adressauflösungsfunktionalität (160) umfassen oder dieser zugewiesen sind, wobei das Verfahren die folgenden Schritte umfasst:
- in einem ersten Schritt empfängt die Client-Kommunikationsvorrichtung (20) von der Adressauflösungsfunktionalität (160) eine Adressabbildungsinformation (200) in Bezug auf die mindestens eine Ressource (150) oder in Bezug auf den mindestens einen Dienst oder die mindestens eine Anwendung, wobei die Adressabbildungsinformation (200) mindestens eine Bedingungsinformation (211) und eine Dienst- oder Anwendungsadressinformation (221) umfasst, die mit der mindestens einen Bedingungsinformation (211) verknüpft sind oder in Beziehung stehen, wobei die Dienst- oder Anwendungsadressinformation (221) sich auf einen Endpunkt der mehreren Endpunkte (151, 152, 153) bezieht und die mindestens eine Bedingungsinformation (211) ein zeitbezogenes Bedingungselement und ein standortbezogenes Bedingungselement umfasst, die eine Bedingung definieren, die zu der Client-Kommunikationsvorrichtung (20) gehört oder sich auf diese bezieht, wobei die Adressabbildungsinformation (200) - neben der mindestens einen Bedingungsinformation (211) und der Dienst- oder Anwendungsadressinformation (221) - mindestens eine weitere Bedingungsinformation (212) und eine weitere Dienst- oder Anwendungsadressinformation (222) umfasst, die mit der mindestens einen weiteren Bedingungsinformation (212) verknüpft sind oder in Beziehung stehen, wobei sich die weitere Dienst- oder Anwendungsadresseninformation (222) auf einen weiteren Endpunkt der mehreren Endpunkte (151, 152, 153) bezieht und die mindestens eine weitere Bedingungsinformation (212) ein weiteres zeitbezogenes Bedingungselement und ein weiteres standortbezogenes Bedingungselement umfasst, die eine weitere Bedingung definieren, die zu der Client-Kommunikationsvorrichtung (20) gehört oder sich auf dieses bezieht,
- in einem zweiten Schritt führt die Client-Kommunikationsvorrichtung (20) eine Detektion in Bezug auf die Bedingungsinformation (211) und die weitere Bedingungsinformation (212) durch, wobei die durch das zeitbezogene Bedingungselement und das standortbezogene Bedingungselement der Bedingungsinformation (211) definierte Bedingung durch die Client-Kommunikationsvorrichtung (20) als verifiziert detektiert wird und die Client-Kommunikationsvorrichtung (20) die Dienst- oder Anwendungsadressinformation (221), in Bezug auf die Bedingungsinformation (211), als eine gültige Dienst- oder Anwendungsadressinformation (221) erachtet, wobei die durch das weitere zeitbezogene Bedingungselement und das weitere standortbezogene Bedingungselement der weiteren Bedingungsinformation (212) definierte Bedingung durch die Client-Kommunikationsvorrichtung (20) als ungültig detektiert wird und die Client-Kommunikationsvorrichtung (20) die weitere Dienst- oder Anwendungsadressinformation (222), in Bezug auf die weitere Bedingungsinformation (212), nicht als eine gültige Dienst- oder Anwendungsadressinformation (222) erachtet,
wobei die durch das zeitbezogene Bedingungselement und das standortbezogene Bedingungselement der Bedingungsinformation (21) definierte Bedingung zu einem späteren Zeitpunkt ungültig wird und die zunächst nichterfüllte oder nicht-realisierte weitere Bedingung zu dem späteren Zeitpunkt erfüllt oder realisiert wird, wobei die entsprechende weitere Dienst- oder Anwendungsadressinformation anschließend durch die Client-Kommunikationseinrichtung (20) als eine gültige Dienst- oder Anwendungsadressinformation erachtet wird.

2. Verfahren nach Anspruch 1, wobei, in einem dritten Schritt, die Client-Kommunikationsvorrichtung (20) die Ressource (150) adressiert:
- über den Endpunkt der mehreren Endpunkte (151, 152, 153), der sich auf die Dienst- oder Anwendungsadressinformation (221) bezieht, die mit der mindestens einen Bedingungsinformation (211) verknüpft ist oder in Beziehung steht, in dem Fall, dass die Dienst- oder Anwendungsadressinformation (221) als eine gültige Dienst- oder Anwendungsadressinformation (221) erachtet wird.

3. Verfahren nach einem der vorangehenden Ansprüche, wobei die Client-Kommunikationseinrichtung (20), vor dem oder während des ersten Schrittes, von der Adressauflösungsfunktionalität (160) bzw. entweder als Teil der Adressabbildungsinformation (200) oder neben der Adressabbildungsinformation (200) bzw. mindestens eine unbedingte Dienst- oder Anwendungsadressinformation (225) empfängt, wobei die unbedingte Dienst- oder Anwendungsadressinformation (225) durch die Client-Kommunikationseinrichtung (20) als eine gültige Dienst- oder Anwendungsadressinformation (225) verwendet werden kann, insbesondere ohne dass eine Bedingung als verifiziert detektiert wird.

4. Verfahren nach einem der vorangehenden Ansprüche, wobei sich die Bedingungen der Bedingungselemente der Bedingungsinformation und der weiteren Bedingungsinformation (211, 212) auf sich gegenseitig ausschließende Bedingungen oder auf Bedingungen, die sich bzw. wenigstens teilweise bzw. nicht überlappen, beziehen

5. Verfahren nach einem der vorangehenden Ansprüche, wobei eines oder mehrere von Folgendem realisiert werden:
- das Telekommunikationsnetz (100) ist, oder bezieht sich auf, ein Mobilkommunikationsnetz, insbesondere ein Mobiltelefon-Kommunikationsnetz,
- die Ressource (150) ist eine, oder entspricht einer, oder bezieht sich auf eine, Edge-Computing-Infrastruktur, die mindestens einen Edge-Computing-Dienst oder eine Edge-Computing-Anwendung anbietet, die mehrere Edge-Computing-Infrastrukturressourcen umfasst, wobei jede Edge-Computing-InfrastrukturRessource über einen adressierbaren Endpunkt durch das Telekommunikationsnetz (100) adressierbar ist,
- ein Ressourcenendpunkt (151, 152, 153) bezieht sich auf einen adressierbaren Endpunkt einer Computing-Infrastrukturressource,
- die Endpunkte (151, 152, 153), mittels derer ein Dienst oder eine Anwendung, der bzw. die auf der Edge-Computing-Infrastruktur (150) läuft, für die Client-Kommunikationsvorrichtung (20) zugänglich ist, dynamisch sind, insbesondere in dem Fall, dass solche Endpunkte (151, 152, 153) davon abhängig sind, ob eine gegebene Edge-Computing-Infrastrukturressource, die sich an einem gegebenen Standort befindet und/oder einen gegebenen Standort oder ein gegebenes geografisches Gebiet bedient, verwendet wird, erreichbar ist und der Client-Kommunikationsvorrichtung (20) den Dienst oder die Anwendung zu einem gegebenen Zeitpunkt anbietet,
- die Client-Kommunikationsvorrichtung (20) wird auf einen Verfolgungsbereich innerhalb des Telekommunikationsnetzes (100) abgebildet, und ihr Standort oder geographisches Gebiet bezieht sich auf einen Verfolgungsbereich, wobei die Client-Kommunikationsvorrichtung (20) den Verfolgungsbereich, in dem sie sich befindet, kennt oder detektieren kann,
- das Telekommunikationsnetz (100) erlaubt einen lokalen Zugriff auf Ressourcen über ein Nahbereichs-Datennetz (Local Area Data Network, LADN), der Client-Kommunikationsvorrichtung (20) wird der Zugriff auf das LADN gestattet, und ihr Standort oder geographisches Gebiet bezieht sich auf das LADN innerhalb des Telekommunikationsnetzes (100), wobei die Client-Kommunikationsvorrichtung (20) das LADN, auf das sie Zugriff hat, kennt oder detektieren kann,
- das Telekommunikationsnetz (100) ist in eine oder mehrere Netz-Slices segmentiert, und die Client-Kommunikationsvorrichtung (20) greift auf eine Netz-Slice innerhalb des Telekommunikationsnetzes (100) zu, und ihr Standort oder geographisches Gebiet bezieht sich auf die Slice innerhalb des Telekommunikationsnetzes (100), wobei die Client-Kommunikationsvorrichtung (20) die Netz-Slice, die sie für den Zugriff auf das Telekommunikationsnetz (100) verwendet, kennt oder detektieren kann.

6. Verfahren nach einem der vorangehenden Ansprüche, wobei die Adressabbildungsinformation (200) mindestens einem "Domain Name System"-Ressourcendatensatz entspricht oder einen solchen umfasst, wobei der mindestens eine "Domain Name System"-Ressourcendatensatz eine Lebensdauerwert-Information umfasst, wobei die Lebensdauerwert-Information des mindestens einen "Domain Name System"-Ressourcendatensatzes auf null gesetzt wird, und/oder wobei die Adressabbildungsinformation (200) unter Verwendung von mindestens einem der folgenden Protokolle gesendet wird:
- Domain Name System (DNS)-Protokoll;
- Hypertext Transfer Protocol (HTTP),
- Hypertext Transfer Protocol Secure (HTTPS),
- Domain Name System over HTTP (DNS over HTTP),
- ein "Transport Layer Security"-basiertes Protokoll (TLS-basiertes Protokoll),
und/oder wobei die Dienst- oder Anwendungsadressinformationen als Teil der Adresszuordnungsinformation (200) Internetprotokolladressen entsprechen.

7. Verfahren nach einem der vorangehenden Ansprüche, wobei die Client-Kommunikationsvorrichtung (20), vor dem ersten Schritt, die Adressabbildungsinformation (200) von der Adressauflösungsfunktionalität (160) und mittels einer Adressabbildungsanforderung (300), die mit dem mindestens einen Edge-Computing-Dienst oder der mindestens einen Edge-Computing-Anwendung in Beziehung steht oder diese betrifft, anfordert, wobei die Adressabbildungsanforderung (300) eine Bedingungsanforderungsinformation (311) umfasst, wobei die Bedingungsanforderungsinformation (311) mit der Bedingungsinformation (211) in Beziehung steht.

8. Verfahren nach einem der vorangehenden Ansprüche, wobei das Telekommunikationsnetz (100) und/oder die Ressource (150) und/oder die Adressauflösungsfunktionalität (160) eine Vorhersagefunktionalität (170) umfasst oder dieser zugewiesen ist, wobei die Vorhersagefunktionalität (170) die Standorte der Client-Kommunikationsvorrichtung (20) vorhersagt und der Adressauflösungsfunktionalität (160) Informationen zur Verfügung stellt, dergestalt, dass sich die Adresszuordnungsinformation (200) bezüglich des mindestens einen Dienstes oder der mindestens einen Anwendung auf Bedingungen bezieht, die die Client-Kommunikationsvorrichtung (20) vergleichsweise wahrscheinlich erfüllt.

9. Client-Kommunikationsvorrichtung (20) zum Betreiben einer Adressauflösungsfunktionalität innerhalb oder als Teil eines Telekommunikationsnetzes (100), das eine Ressource (150) umfasst, die mindestens eines von einer Anwendung, einem Dienst, einer Vorrichtung und einem Benutzer darstellt, auf die durch die Ressource (150) zugegriffen werden kann, wobei die Client-Kommunikationsvorrichtung (20) in der Lage ist, sich mit mehreren Endpunkten (151, 152, 153) der Ressource (150) zu verbinden, von denen jeder eine Dienst- oder Anwendungsadresse besitzt oder einer solchen zugewiesen ist, wobei die Client-Kommunikationsvorrichtung (20), die zu dem Telekommunikationsnetz (100) gehört oder mit diesem verbunden ist, in der Lage ist, mindestens einen Dienst oder eine Anwendung, der bzw. die durch die Ressource (150) bereitgestellt wird, anzufordern oder darauf zuzugreifen, wobei die Client-Kommunikationsvorrichtung (20) den mindestens einen Dienst oder die mindestens eine Anwendung mittels Adressierung mindestens eines Endpunktes (151, 152, 153) anfordert oder darauf zugreift, wobei das Telekommunikationsnetz (100) und/oder die Ressource (150) eine Adressauflösungsfunktionalität (160) umfassen oder dieser zugewiesen sind, wobei die Client-Kommunikationsvorrichtung (20) so konfiguriert ist, dass:
- die Client-Kommunikationsvorrichtung (20) von der Adressauflösungsfunktionalität (160) eine Adressabbildungsinformation (200) in Bezug auf die mindestens eine Ressource (150) oder in Bezug auf den mindestens einen Dienst oder die mindestens eine Anwendung empfängt, wobei die Adressabbildungsinformation (200) mindestens eine Bedingungsinformation (211) und eine Dienst- oder Anwendungsadressinformation (221) umfasst, die mit der mindestens einen Bedingungsinformation (211) verknüpft sind oder in Beziehung stehen, wobei die Dienst- oder Anwendungsadressinformation (221) sich auf einen Endpunkt der mehreren Endpunkte (151, 152, 153) bezieht und die mindestens eine Bedingungsinformation (211) ein zeitbezogenes Bedingungselement und ein standortbezogenes Bedingungselement umfasst, die eine Bedingung definieren, die zu der Client-Kommunikationsvorrichtung (20) gehört oder sich auf diese bezieht, wobei die Adressabbildungsinformation (200) bzw. neben der mindestens einen Bedingungsinformation (211) und der Dienst- oder Anwendungsadressinformation (221) bzw. mindestens eine weitere Bedingungsinformation (212) und eine weitere Dienst- oder Anwendungsadressinformation (222) umfasst, die mit der mindestens einen weiteren Bedingungsinformation (212) verknüpft sind oder in Beziehung stehen, wobei sich die weitere Dienst- oder Anwendungsadresseninformation (222) auf einen weiteren Endpunkt der mehreren Endpunkte (151, 152, 153) bezieht und die mindestens eine weitere Bedingungsinformation (212) ein weiteres zeitbezogenes Bedingungselement und ein weiteres standortbezogenes Bedingungselement umfasst, die eine weitere Bedingung definieren, die zu der Client-Kommunikationsvorrichtung (20) gehört oder sich auf dieses bezieht,
- die Client-Kommunikationsvorrichtung (20) eine Detektion in Bezug auf die Bedingungsinformation (211) und die weitere Bedingungsinformation (212) durchführt, wobei die durch das zeitbezogene Bedingungselement und das standortbezogene Bedingungselement der Bedingungsinformation (211) definierte Bedingung durch die Client-Kommunikationsvorrichtung (20) als verifiziert detektiert wird und die Client-Kommunikationsvorrichtung (20) die Dienst- oder Anwendungsadressinformation (221), in Bezug auf die Bedingungsinformation (211), als eine gültige Dienst- oder Anwendungsadressinformation (221) erachtet, wobei die durch das weitere zeitbezogene Bedingungselement und das weitere standortbezogene Bedingungselement der weiteren Bedingungsinformation (212) definierte Bedingung durch die Client-Kommunikationsvorrichtung (20) als ungültig detektiert wird und die Client-Kommunikationsvorrichtung (20) die weitere Dienst- oder Anwendungsadressinformation (222), in Bezug auf die weitere Bedingungsinformation (212), nicht als eine gültige Dienst- oder Anwendungsadressinformation (222) erachtet,
wobei die durch das zeitbezogene Bedingungselement und das standortbezogene Bedingungselement der Bedingungsinformation (211) definierte Bedingung zu einem späteren Zeitpunkt ungültig wird und die zunächst nichterfüllte oder nicht-realisierte weitere Bedingung zu dem späteren Zeitpunkt erfüllt oder realisiert wird, wobei die entsprechende weitere Dienst- oder Anwendungsadressinformation anschließend durch die Client-Kommunikationseinrichtung (20) als eine gültige Dienst- oder Anwendungsadressinformation erachtet wird.

10. System oder Telekommunikationsnetz (100) zum Betreiben einer Adressauflösungsfunktionalität innerhalb oder als Teil eines Telekommunikationsnetzes (100), das eine Ressource (150) umfasst, die mindestens eines von einer Anwendung, einem Dienst, einer Vorrichtung und einem Benutzer darstellt, auf die durch die Ressource (150) zugegriffen werden kann, wobei die Ressource (150) mehrere Endpunkte (151, 152, 153) umfasst, von denen jeder eine Dienst- oder Anwendungsadresse besitzt oder einer solchen zugewiesen ist, wobei eine Client-Kommunikationsvorrichtung (20), die zu dem Telekommunikationsnetz (100) gehört oder mit diesem verbunden ist, in der Lage ist, mindestens einen Dienst oder eine Anwendung, der bzw. die durch die Ressource (150) bereitgestellt wird, anzufordern oder darauf zuzugreifen, wobei die Client-Kommunikationsvorrichtung (20) den mindestens einen Dienst oder die mindestens eine Anwendung mittels Adressierung mindestens eines Endpunktes (151, 152, 153) anfordert oder darauf zugreift, wobei das Telekommunikationsnetz (100) und/oder die Ressource (150) eine Adressauflösungsfunktionalität (160) umfassen oder dieser zugewiesen sind, wobei das System oder das Telekommunikationsnetz (100) so konfiguriert ist, dass:
- die Adressauflösungsfunktionalität (160) an die Client-Kommunikationsvorrichtung (20) eine Adressabbildungsinformation (200) in Bezug auf die mindestens eine Ressource (150) oder in Bezug auf den mindestens einen Dienst oder die mindestens eine Anwendung sendet, wobei die Adressabbildungsinformation (200) mindestens eine Bedingungsinformation (211) und eine Dienst- oder Anwendungsadressinformation (221) umfasst, die mit der mindestens einen Bedingungsinformation (211) verknüpft sind oder in Beziehung stehen, wobei die Dienst- oder Anwendungsadressinformation (221) sich auf einen Endpunkt der mehreren Endpunkte (151, 152, 153) bezieht und die mindestens eine Bedingungsinformation (211) ein zeitbezogenes Bedingungselement und ein standortbezogenes Bedingungselement umfasst, die eine Bedingung definieren, die zu der Client-Kommunikationsvorrichtung (20) gehört oder sich auf diese bezieht, wobei die Adressabbildungsinformation (200) bzw. neben der mindestens einen Bedingungsinformation (211) und der Dienst- oder Anwendungsadressinformation (221) bzw. mindestens eine weitere Bedingungsinformation (212) und eine weitere Dienst- oder Anwendungsadressinformation (222) umfasst, die mit der mindestens einen weiteren Bedingungsinformation (212) verknüpft sind oder in Beziehung stehen, wobei sich die weitere Dienst- oder Anwendungsadresseninformation (222) auf einen weiteren Endpunkt der mehreren Endpunkte (151, 152, 153) bezieht und die mindestens eine weitere Bedingungsinformation (212) ein weiteres zeitbezogenes Bedingungselement und ein weiteres standortbezogenes Bedingungselement umfasst, die eine weitere Bedingung definieren, die zu der Client-Kommunikationsvorrichtung (20) gehört oder sich auf dieses bezieht,
- die Client-Kommunikationsvorrichtung (20) eine Detektion in Bezug auf die Bedingungsinformation (211) und die weitere Bedingungsinformation (212) durchführt, wobei die durch das zeitbezogene Bedingungselement und das standortbezogene Bedingungselement der Bedingungsinformation (211) definierte Bedingung durch die Client-Kommunikationsvorrichtung (20) als verifiziert detektiert wird und die Client-Kommunikationsvorrichtung (20) die Dienst- oder Anwendungsadressinformation (221), in Bezug auf die Bedingungsinformation (211), als eine gültige Dienst- oder Anwendungsadressinformation (221) erachtet, wobei die durch das weitere zeitbezogene Bedingungselement und das weitere standortbezogene Bedingungselement der weiteren Bedingungsinformation (212) definierte Bedingung durch die Client-Kommunikationsvorrichtung (20) als ungültig detektiert wird und die Client-Kommunikationsvorrichtung (20) die weitere Dienst- oder Anwendungsadressinformation (222), in Bezug auf die weitere Bedingungsinformation (212), nicht als eine gültige Dienst- oder Anwendungsadressinformation (222) erachtet,
wobei die durch das zeitbezogene Bedingungselement und das standortbezogene Bedingungselement der Bedingungsinformation (211) definierte Bedingung zu einem späteren Zeitpunkt ungültig wird und die zunächst nichterfüllte oder nicht-realisierte weitere Bedingung zu dem späteren Zeitpunkt erfüllt oder realisiert wird, wobei die entsprechende weitere Dienst- oder Anwendungsadressinformation anschließend durch die Client-Kommunikationseinrichtung (20) als eine gültige Dienst- oder Anwendungsadressinformation erachtet wird.

11. Adressauflösungsfunktionalität (160) eines Systems oder eines Kommunikationsnetzes (100) nach Anspruch 10.

12. Programm, das einen computerlesbaren Programmcode und/oder ein computerlesbares Medium umfasst, das Instruktionen umfasst, die, wenn sie teilweise in einer Client-Kommunikationsvorrichtung (20) und teilweise in einer Adressauflösungsfunktionalität (160) ausgeführt werden, die Client-Kommunikationsvorrichtung (20) und die Adressauflösungsfunktionalität (160) veranlassen, ein Verfahren nach einem der Ansprüche 1 bis 8 durchzuführen.

## Revendications

1. Procédé de fonctionnement d'une fonctionnalité de résolution d'adresse au sein ou dans le cadre d'un réseau de télécommunications (100) comprenant une ressource (150), représentant au moins l'un parmi une application, un service, un dispositif ou un utilisateur, accessible à travers la ressource (150), la ressource (150) comprenant une pluralité de points d'extrémité (151, 152, 153) dont chacun possède ou est affecté à une adresse de service ou d'application, dans lequel un dispositif de communication client (20) du réseau de télécommunications (100) ou connecté à celui-ci est en mesure de demander ou d'accéder à au moins un service ou une application fournis par la ressource (150), dans lequel le dispositif de communication client (20) demande ou accède à l'au moins un service ou une application en adressant au moins un point d'extrémité (151, 152, 153), dans lequel le réseau de télécommunications (100) et/ou la ressource (150) comprennent ou sont affectés à une fonctionnalité de résolution d'adresse (160), dans lequel le procédé comprend les étapes suivantes :
- dans une première étape, le dispositif de communication client (20) reçoit, à partir de la fonctionnalité de résolution d'adresse (160), une information de mise en correspondance d'adresses (200) concernant l'au moins une ressource (150) ou concernant l'au moins un service ou une application, l'information de mise en correspondance d'adresses (200) comprenant au moins une information de condition (211) et une information d'adresse de service ou d'application (221) associée ou liée à l'au moins une information de condition (211), l'information d'adresse de service ou d'application (221) étant liée à un point d'extrémité de la pluralité de points d'extrémité (151, 152, 153) et l'au moins une information de condition (211) comprenant un élément de condition lié au temps et un élément de condition lié à l'emplacement définissant une condition du dispositif de communication client ou liée à celui-ci (20), dans lequel l'information de mise en correspondance d'adresses (200) comprend - outre l'au moins une information de condition (211) et l'information d'adresse de service ou d'application (221) - au moins une autre information de condition (212) et une autre information d'adresse de service ou d'application (222) associée ou liée à l'au moins une autre information de condition (212), dans lequel l'autre information d'adresse de service ou d'application (222) est associée à un autre point d'extrémité de la pluralité de points d'extrémité (151, 152, 153) et l'au moins une autre information de condition (212) comprenant un autre élément de condition lié au temps et un autre élément de condition lié à l'emplacement définissant une autre condition du dispositif de communication client (20) ou liée à celui-ci,
- dans une deuxième étape, le dispositif de communication client (20) effectue une détection liée à l'information de condition (211) et à l'autre information de condition (212), dans lequel la condition définie par l'élément de condition lié au temps et l'élément de condition lié à l'emplacement de l'information de condition (211) est détectée comme étant vérifiée par le dispositif de communication client (20) et le dispositif de communication client (20) considère l'information d'adresse de service ou d'application (221), liée à l'information de condition (211), comme une information d'adresse de service ou d'application valide (221), dans lequel la condition définie par l'autre élément de condition lié au temps et l'autre élément de condition lié à l'emplacement de l'autre information de condition (212) est détectée comme étant invalide par le dispositif de communication client (20) et le dispositif de communication client (20) ne considère pas l'autre information d'adresse de service ou d'application (222), liée à l'autre information de condition (212), comme une information d'adresse de service ou d'application valide (222),
dans lequel la condition définie par l'élément de condition lié au temps et l'élément de condition lié à l'emplacement de l'information de condition (21) devient invalide à un moment ultérieur et l'autre condition initialement non satisfaite ou non réalisée est satisfaite ou réalisée à un moment ultérieur, dans lequel l'autre information d'adresse de service ou d'application correspondante est ensuite considérée comme une information d'adresse de service ou d'application valide par le dispositif de communication client (20).

2. Procédé selon la revendication 1, dans lequel dans une troisième étape, le dispositif de communication client (20) adresse la ressource (150)
- par l'intermédiaire du point d'extrémité de la pluralité de points d'extrémité (151, 152, 153) qui est associé à l'information d'adresse de service ou d'application (221) associée ou liée à l'au moins une information de condition (211) dans le cas où l'information d'adresse de service ou d'application (221) est considérée comme une information d'adresse de service ou d'application valide (221).

3. Procédé selon l'une des revendications précédentes, dans lequel, avant ou pendant la première étape, le dispositif de communication client (20) reçoit, à partir de la fonctionnalité de résolution d'adresse (160) - soit dans le cadre d'une information de mise en correspondance d'adresses (200), soit en plus de l'information de mise en correspondance d'adresses (200) - au moins une information d'adresse de service ou d'application inconditionnelle (225), l'information d'adresse de service ou d'application inconditionnelle (225) pouvant être utilisée, par le dispositif de communication client (20), comme une information d'adresse de service ou d'application valide (225), notamment sans qu'une condition soit détectée pour être vérifiée.

4. Procédé selon l'une des revendications précédentes, dans lequel les conditions des éléments de condition de l'information de condition et de l'autre information de condition (211, 212) se rapportent à des conditions qui s'excluent mutuellement ou à des conditions qui, au moins partiellement, ne se chevauchent pas.

5. Procédé selon l'une des revendications précédentes, dans lequel on réalise l'un ou une pluralité parmi ce qui suit :
- le réseau de télécommunications (100) est ou fait référence à un réseau de communication mobile, notamment un réseau de communication mobile cellulaire,
- la ressource (150) est ou correspond à ou se rapporte à une infrastructure informatique de périphérie offrant au moins un service ou une application informatique de périphérie, comprenant une pluralité de ressources d'infrastructure informatique de périphérie, chaque ressource d'infrastructure informatique de périphérie étant adressable par l'intermédiaire d'un point d'extrémité adressable à travers le réseau de télécommunications (100),
- un point d'extrémité de ressource (151, 152, 153) se rapporte à un point d'extrémité adressable d'une ressource d'infrastructure informatique,
- les points d'extrémité (151, 152, 153) au moyen desquels un service ou une application exécutés sur l'infrastructure informatique de périphérie (150) est accessible au dispositif de communication client (20) sont dynamiques, en particulier dans le cas où de tels points d'extrémité (151, 152, 153) sont conditionnés au fait qu'une ressource d'infrastructure informatique de périphérie donnée à un emplacement donné et/ou desservant un emplacement ou une zone géographique donnés est déployée, accessible et offre le service ou l'application au dispositif de communication client (20) à un moment donné,
- le dispositif de communication client (20) est mappé sur une zone de suivi au sein du réseau de télécommunications (100) et son emplacement ou zone géographique se rapporte à une zone de suivi, tandis que le dispositif de communication client (20) a connaissance de ou est capable de détecter la zone de suivi dans laquelle il se trouve,
- le réseau de télécommunications (100) permet un accès local à des ressources par l'intermédiaire d'un réseau de données local, LADN, le dispositif de communication client (20) est autorisé à accéder au LADN et son emplacement ou sa zone géographique se rapporte au LADN au sein du réseau de télécommunications (100), dans lequel le dispositif de communication client (20) a connaissance de ou est capable de détecter le LADN auquel il a accès,
- le réseau de télécommunications (100) est segmenté en une ou plusieurs tranches de réseau et le dispositif de communication client (20) accède à une tranche de réseau au sein du réseau de télécommunications (100) et son emplacement ou sa zone géographique se rapporte à la tranche au sein du réseau de télécommunications (100), dans lequel le dispositif de communication client (20) a connaissance de ou est capable de détecter la tranche de réseau qu'il utilise pour accéder au réseau de télécommunications (100).

6. Procédé selon l'une des revendications précédentes, dans lequel l'information de mise en correspondance d'adresses (200) correspond à ou comprend au moins un enregistrement de ressource de système de noms de domaine, l'au moins un enregistrement de ressource de système de noms de domaine comprenant une information de valeur de durée de vie, dans lequel l'information de valeur de durée de vie de l'au moins un enregistrement de ressource de système de noms de domaine est mise à zéro, et/ou
dans lequel l'information de mise en correspondance d'adresses (200) est transmise en utilisant au moins l'un des protocoles suivants :
- protocole de système de noms de domaine, protocole DNS,
- protocole de transfert hypertexte, HTTP,
- protocole de transfert hypertexte sécurisé, HTTPS,
- système de noms de domaine sur HTTP, DNS sur HTTP,
- un protocole basé sur la sécurité de la couche de transport, protocole TLS,
et/ou dans lequel les éléments d'informations d'adresse de service ou d'application faisant partie de l'information de mise en correspondance d'adresses (200) correspondent à des adresses de protocole Internet.

7. Procédé selon l'une des revendications précédentes, dans lequel avant la première étape, le dispositif de communication client (20) demande l'information de mise en correspondance d'adresses (200) à la fonctionnalité de résolution d'adresse (160) et au moyen d'une demande de mise en correspondance d'adresses (300) liée à ou concernant l'au moins un service ou une application informatique de périphérie, la demande de mise en correspondance d'adresses (300) comprenant une information de demande de condition (311), dans lequel l'information de demande de condition (311) est liée à l'information de condition (211).

8. Procédé selon l'une des revendications précédentes, dans lequel le réseau de télécommunications (100) et/ou la ressource (150) et/ou la fonctionnalité de résolution d'adresse (160) comprennent ou sont affectés à une fonctionnalité de prédiction (170), dans lequel la fonctionnalité de prédiction (170) prédit les emplacements du dispositif de communication client (20), et fournit des informations à la fonctionnalité de résolution d'adresse (160) de telle sorte que les informations de mise en correspondance d'adresses (200) concernant l'au moins un service ou une application se rapportent à des conditions que le dispositif de communication client (20) est comparativement susceptible de remplir.

9. Dispositif de communication client (20) destiné à exploiter une fonctionnalité de résolution d'adresse au sein ou dans le cadre d'un réseau de télécommunications (100) comprenant une ressource (150), représentant au moins l'un parmi une application, un service, un dispositif ou un utilisateur, accessible à travers la ressource (150), le dispositif de communication client (20) pouvant se connecter à une pluralité de points d'extrémité (151, 152, 153) de la ressource (150), chacun d'entre eux ayant ou étant affecté à une adresse de service ou d'application, dans lequel le dispositif de communication client (20) du réseau de télécommunications (100) ou connecté à celui-ci est en mesure de demander ou d'accéder à l'au moins un service ou une application fournis par la ressource (150), dans lequel le dispositif de communication client (20) demande ou accède à l'au moins un service ou une application en adressant au moins un point d'extrémité (151, 152, 153), dans lequel le réseau de télécommunications (100) et/ou la ressource (150) comprennent ou sont affectés à une fonctionnalité de résolution d'adresse (160), dans lequel le dispositif de communication client (20) est configuré de telle sorte que :
- le dispositif de communication client (20) reçoit, à partir de la fonctionnalité de résolution d'adresse (160), une information de mise en correspondance d'adresses (200) concernant l'au moins une ressource (150) ou concernant l'au moins un service ou une application, l'information de mise en correspondance d'adresses (200) comprenant au moins une information de condition (211) et une information d'adresse de service ou d'application (221) associée ou liée à l'au moins une information de condition (211), l'information d'adresse de service ou d'application (221) étant liée à un point d'extrémité de la pluralité de points d'extrémité (151, 152, 153) et l'au moins une information de condition (211) comprenant un élément de condition lié au temps et un élément de condition lié à l'emplacement définissant une condition du dispositif de communication client ou liée à celui-ci (20), dans lequel l'information de mise en correspondance d'adresses (200) comprend - outre l'au moins une information de condition (211) et l'information d'adresse de service ou d'application (221) - au moins une autre information de condition (212) et une autre information d'adresse de service ou d'application (222) associée ou liée à l'au moins une autre information de condition (212), dans lequel l'autre information d'adresse de service ou d'application (222) est associée à un autre point d'extrémité de la pluralité de points d'extrémité (151, 152, 153) et l'au moins une autre information de condition (212) comprenant un autre élément de condition lié au temps et un autre élément de condition lié à l'emplacement définissant une autre condition du dispositif de communication client (20) ou liée à celui-ci,
- le dispositif de communication client (20) effectue une détection liée à l'information de condition (211) et à l'autre information de condition (212), dans lequel la condition définie par l'élément de condition lié au temps et l'élément de condition liée à l'emplacement de l'information de condition (211) est détectée comme étant vérifiée par le dispositif de communication client (20) et le dispositif de communication client (20) considère l'information d'adresse de service ou d'application (221), liée à l'information de condition (211), comme une information d'adresse de service ou d'application valide (221), dans lequel la condition définie par l'autre élément de condition lié au temps et l'autre élément de condition lié à l'emplacement de l'autre information de condition (212) est détectée comme étant invalide par le dispositif de communication client (20) et le dispositif de communication client (20) ne considère pas l'autre information d'adresse de service ou d'application (222), liée à l'autre information de condition (212), comme une information d'adresse de service ou d'application valide (222),
dans lequel la condition définie par l'élément de condition lié au temps et l'élément de condition lié à l'emplacement de l'information de condition (211) devient invalide à un moment ultérieur et l'autre condition initialement non satisfaite ou non réalisée est satisfaite ou réalisée à un moment ultérieur, dans lequel l'autre information d'adresse de service ou d'application correspondante est ensuite considérée comme une information d'adresse de service ou d'application valide par le dispositif de communication client (20).

10. Système ou réseau de télécommunications (100) pour exploiter une fonctionnalité de résolution d'adresse au sein ou dans le cadre d'un réseau de télécommunications (100) comprenant une ressource (150), représentant au moins l'un parmi une application, un service, un dispositif ou un utilisateur, accessible par la ressource (150), la ressource (150) comprenant une pluralité de points d'extrémité (151, 152, 153) dont chacun possède ou est affecté à une adresse de service ou d'application, dans lequel un dispositif de communication client (20) du réseau de télécommunications (100) ou connecté à celui-ci peut demander ou accéder à au moins un service ou une application fournis par la ressource (150), dans lequel le dispositif de communication client (20) demande ou accède à l'au moins un service ou une application en adressant au moins un point d'extrémité (151, 152, 153), dans lequel le réseau de télécommunications (100) et/ou la ressource (150) comprennent ou sont affectés à une fonctionnalité de résolution d'adresse (160), dans lequel le système ou le réseau de télécommunications (100) est configuré de telle sorte que :
- la fonctionnalité de résolution d'adresse (160) transmet au dispositif de communication client (20), une informations de mise en correspondance d'adresses (200) concernant l'au moins une ressource (150) ou concernant l'au moins un service ou une application, l'information de mise en correspondance d'adresses (200) comprenant au moins une information de condition (211) et une information d'adresse de service ou d'application (221) associée ou liée à l'au moins une information de condition (211), l'information d'adresse de service ou d'application (221) étant liée à un point d'extrémité de la pluralité de points d'extrémité (151, 152, 153) et l'au moins une information de condition (211) comprenant un élément de condition lié au temps et un élément de condition lié à l'emplacement définissant une condition du dispositif de communication client ou liée à celui-ci (20), dans lequel l'information de mise en correspondance d'adresses (200) comprend - outre l'au moins une information de condition (211) et l'information d'adresse de service ou d'application (221) - au moins une autre information de condition (212) et une autre information d'adresse de service ou d'application (222) associée ou liée à l'au moins une autre information de condition (212), dans lequel l'autre information d'adresse de service ou d'application (222) est associée à un autre point d'extrémité de la pluralité de points d'extrémité (151, 152, 153) et l'au moins une autre information de condition (212) comprenant un autre élément de condition lié au temps et un autre élément de condition lié à l'emplacement définissant une autre condition du dispositif de communication client (20) ou liée à celui-ci,
- le dispositif de communication client (20) effectue une détection liée à l'information de condition (211) et à l'autre information de condition (212), dans lequel la condition définie par l'élément de condition lié au temps et l'élément de condition liée à l'emplacement de l'information de condition (211) est détectée comme étant vérifiée par le dispositif de communication client (20) et le dispositif de communication client (20) considère l'information d'adresse de service ou d'application (221), liée à l'information de condition (211), comme une information d'adresse de service ou d'application valide (221), dans lequel la condition définie par l'autre élément de condition lié au temps et l'autre élément de condition lié à l'emplacement de l'autre information de condition (212) est détectée comme étant invalide par le dispositif de communication client (20) et le dispositif de communication client (20) ne considère pas l'autre information d'adresse de service ou d'application (222), liée à l'autre information de condition (212), comme une information d'adresse de service ou d'application valide (222),
dans lequel la condition définie par l'élément de condition lié au temps et l'élément de condition lié à l'emplacement de l'information de condition (211) devient invalide à un moment ultérieur et l'autre condition initialement non satisfaite ou non réalisée est satisfaite ou réalisée à un moment ultérieur, dans lequel l'autre information d'adresse de service ou d'application correspondante est ensuite considérée comme une information d'adresse de service ou d'application valide par le dispositif de communication client (20).

11. Fonctionnalité de résolution d'adresse (160) d'un système ou d'un réseau de communication (100) selon la revendication 10.

12. Programme comprenant un code de programme lisible par ordinateur et/ou support lisible par ordinateur comprenant des instructions qui, lorsqu'elles sont exécutées en partie sur un dispositif de communication client (20) et en partie sur une fonctionnalité de résolution d'adresse (160), amènent le dispositif de communication client (20) et la fonctionnalité de résolution d'adresse (160) à exécuter un procédé selon l'une des revendications 1 à 8.
